# EUROPEAN PATENT APPLICATION

(11) **EP 3 961 870 A1**
(43) Date of publication of application: **02.03.2022**
(21) Application number: 19925819.5
(22) Date of filing: 25.04.2019
(51) Int. Cl.: H02K 3/34, H02K 15/10

(54) **STATOR, MOTOR, FAN, AIR CONDITIONING DEVICE, AND STATOR MANUFACTURING METHOD**

(71) Applicant: MITSUBISHI ELECTRIC CORPORATION, Chiyoda-ku Tokyo 100-8310 (JP)
(72) Inventor: SHIMOKAWA Takaya, Tokyo 100-8310 (JP); ASO Hiroki, Tokyo 100-8310 (JP); TAKAHASHI Ryogo, Tokyo 100-8310 (JP); TAMURA Naoki, Tokyo 100-8310 (JP)
(74) Representative: Pfenning, Meinig & Partner mbB
(86) International application number: PCT/JP2019/017596
(87) International publication number: WO 2020/217375

(57) **Abstract**

A stator includes a stator core having a yoke extending in a circumferential direction about an axis and a tooth extending from the yoke toward the axis, an insulator having a winding portion surrounding the tooth, and a coil wound around the winding portion of the insulator. The winding portion of the insulator has a first end portion located at one side of the tooth in a direction of the axis, a second end portion located at the other side of the tooth in the direction of the axis, and a side portion located at one side of the tooth in the circumferential direction. The first end portion has a maximum thickness T1 in the direction of the axis, the second end portion has a maximum thickness T2 in the direction of the axis, and the side portion has a maximum thickness T3 in the circumferential direction. The maximum thicknesses T1, T2 and T3 satisfy T3 < T1 < T2. The insulator has a gate mark on the same side as the first end portion in the direction of the axis.

## Description

### TECHNICAL FIELD

The present invention relates to a stator, a motor, a fan, an air conditioner, and a manufacturing method of the stator.

### BACKGROUND ART

A stator includes a stator core, an insulator, and a coil wound on the stator core via the insulator. The insulator is composed of a resin and formed integrally with the stator core (see, for example, Patent Reference 1).

### PRIOR ART REFERENCE

### PATENT REFERENCE

[PATENT REFERENCE 1]
Japanese Patent Application Publication No. S50-158805 (FIGS. 3 to 7)

### SUMMARY OF THE INVENTION

### PROBLEM TO BE SOLVED BY THE INVENTION

In order to wind the coil densely on the stator core, it is desirable to reduce the thickness of the insulator. Thus, there is a demand for further reducing the thickness of the insulator.

The present invention is intended to solve the above-described problem, and an object of the present invention is to reduce the thickness of an insulator.

### MEANS OF SOLVING THE PROBLEM

A stator of the present invention includes a stator core having a yoke extending in a circumferential direction about an axis and a tooth extending from the yoke toward the axis, an insulator having a winding portion surrounding the tooth, and a coil wound around the winding portion of the insulator. The winding portion of the insulator has a first end portion located at one side of the tooth in a direction of the axis, a second end portion located at the other side of the tooth in the direction of the axis, and a side portion located at one side of the tooth in the circumferential direction. The first end portion has a maximum thickness T1 in the direction of the axis, and the second end portion has a maximum thickness T2 in the direction of the axis. The side portion has a maximum thickness T3 in the circumferential direction. The maximum thicknesses T1, T2 and T3 satisfy T3 < T1 < T2. The insulator has a gate mark on the same side as the first end portion in the direction of the axis.

### EFFECTS OF THE INVENTION

According to the present invention, the first portion of the winding portion of the insulator, i.e., a portion which is close to a gate of a molding mold and where fluidity of resin is high, has a small thickness. Thus, the thickness of the insulator can be effectively reduced.

### BRIEF DESCRIPTION OF THE DRAWINGS

FIG. 1 is a partial sectional view illustrating a motor of a first embodiment.
FIG. 2 is a sectional view illustrating the motor of the first embodiment.
FIG. 3 is a perspective view illustrating a stator of the first embodiment.
FIG. 4 is a top view illustrating the stator of the first embodiment.
FIG. 5 is a perspective view illustrating an insulator of the first embodiment.
FIG. 6 is a sectional view illustrating a tooth, the insulator, and a coil of the first embodiment.
FIG. 7 is a sectional view illustrating a molding mold for forming the insulator of the first embodiment.
FIG. 8 is a sectional view of the molding mold taken along a line VIII-VIII illustrated in FIG. 7.
FIG. 9 is a sectional view illustrating a molding mold for molding a mold resin portion of the first embodiment.
FIG. 10 is a flowchart illustrating a manufacturing process of the motor of the first embodiment.
FIG. 11 is a graph illustrating a relationship between a thickness of the insulator and a motor efficiency.
FIG. 12 is a graph illustrating a relationship between a resin temperature during molding and each of a melt viscosity and a flowability.
FIG. 13 is a graph illustrating a relationship between a molding pressure and a flow length.
FIG. 14 is a diagram illustrating a relationship among maximum thicknesses T1, T2, and T3 of a first end portion, a second end portion, and a side portion of the insulator of the first embodiment (A) in comparison with those of a comparison example (B).
FIG. 15 is a sectional view illustrating a tooth, an insulator, and a coil of a second embodiment.
FIG. 16(A) is a sectional view illustrating a tooth, an insulator, and a coil of a third embodiment, and FIGS. 16(B) and (C) are enlarged diagrams illustrating corner portions of the insulator of the third embodiment.
FIG. 17(A) is a diagram illustrating a configuration example of an air conditioner to which the motor of each embodiment is applicable, and FIG. 17(B) is a sectional view illustrating an outdoor unit.

### MODE FOR CARRYING OUT THE INVENTION

Embodiments of the present invention will be described in detail below with reference to the figures. The present invention is not limited to these embodiments.

### FIRST EMBODIMENT

### (Configuration of Motor 100)

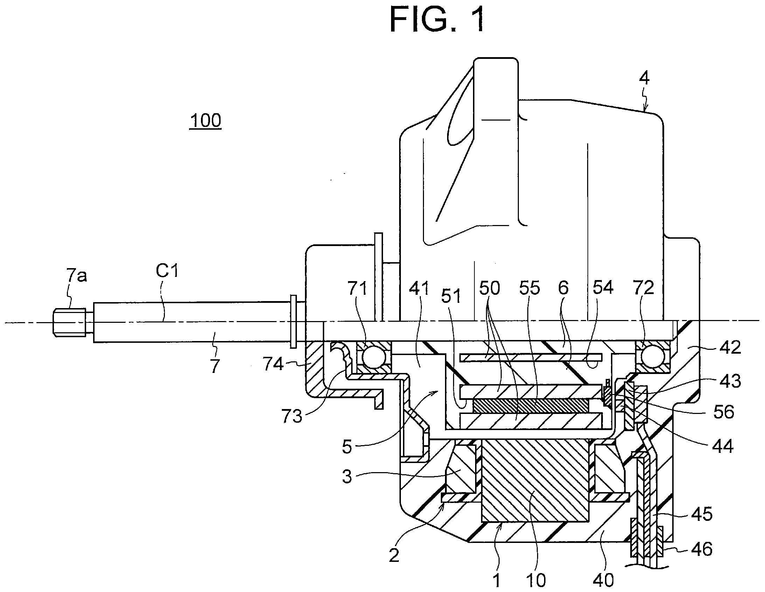

FIG. 1 is a longitudinal-sectional view illustrating a motor 100 according to a first embodiment of the present invention. The motor 100 is a brushless DC motor which is used in, for example, a fan of an air conditioner and driven by an inverter. The motor 100 is an Interior Permanent Magnet (IPM) motor in which magnets 55 are embedded in a rotor 5.

The motor 100 includes the rotor 5 having a shaft 7, and a mold stator 4 surrounding the rotor 5. The mold stator 4 includes a stator 1 having an annular shape and surrounding the rotor 5, and a mold resin portion 40 covering the stator 1. The shaft 7 is a rotation shaft of the rotor 5.

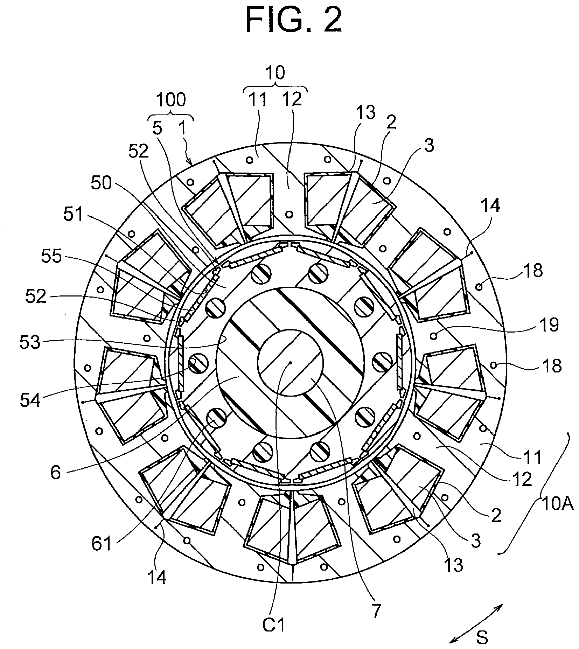

In the description below, a direction of a center axis C1 of the shaft 7 is referred to as an "axial direction". A circumferential direction about the center axis C1 of the shaft 7 is referred to as a "circumferential direction" and indicated by an arrow S in FIG. 2 and other figures. A radial direction about the center axis C1 of the shaft 7 is referred to as a "radial direction". A sectional view in a plane parallel to the axial direction is referred to as a "longitudinal-sectional view".

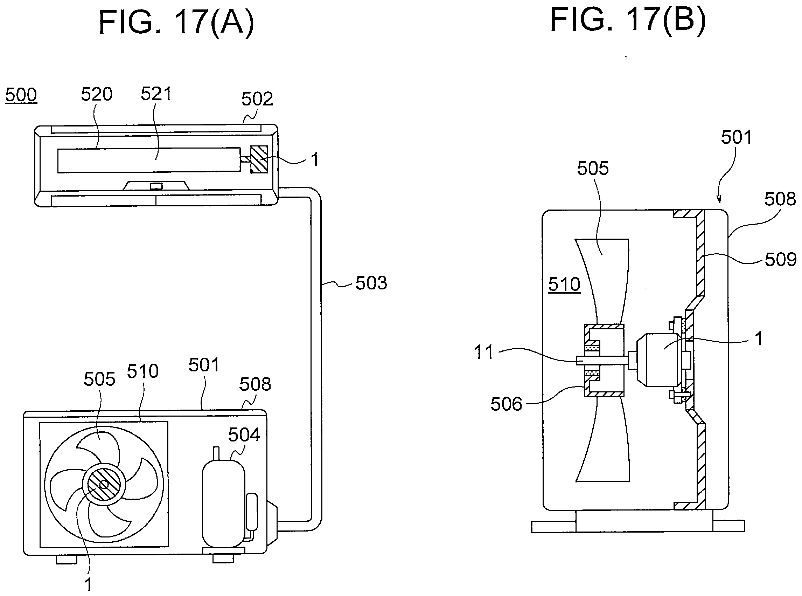

The shaft 7 protrudes from the mold stator 4 to the left side in FIG. 1. An impeller 505 (FIG. 17(A)) of a fan, for example, is attached to an attachment portion 7a formed at a protruding portion of the shaft 7. Thus, the protruding side (the left side in FIG. 1) of the shaft 7 is referred to as a "load side", while the opposite side (the right side in FIG. 1) of the shaft 7 is referred to as a "counter-load side".

### (Configuration of Rotor 5)

FIG. 2 is a sectional view illustrating the motor 100 except for the mold resin portion 40 (FIG. 1). The rotor 5 includes the shaft 7 serving as the rotation shaft, a rotor core 50 provided at a distance from the shaft 7 outward in the radial direction, a plurality of magnets 55 embedded in the rotor core 50, and a resin portion 6 provided between the shaft 7 and the rotor core 50.

The rotor core 50 is a member having an annular shape about the center axis C1. An inner circumference of the rotor core 50 faces the shaft 7 at a distance from the shaft 7. The rotor core 50 is formed of a plurality of stacking elements that are stacked in the axial direction and fixed together by crimping, welding, or bonding. The stacking elements are, for example, electromagnetic steel sheets. The thickness of each stacking element is, for example, 0.2 mm to 0.5 mm.

The rotor core 50 has a plurality of magnet insertion holes 51 in the circumferential direction. The magnet insertion holes 51 are arranged at equal intervals in the circumferential direction and at equal distances from the center axis C1. The number of magnet insertion holes 51 is 10 in this example. The magnet insertion holes 51 are formed along an outer circumference of the rotor core 50 and extend from one end to the other end of the rotor core 50 in the axial direction.

One magnet 55 is inserted in each magnet insertion hole 51. The magnet 55 is also referred to as a main magnet. The magnet 55 is in the form of a flat plate. The magnet 55 has a thickness in the radial direction and is magnetized in the thickness direction.

Each magnet 55 constitutes a magnetic pole. In this example, the number of magnets 55 is 10, and thus the number of magnetic poles of the rotor 5 is 10. The number of magnetic poles of the rotor 5 is not limited to 10 and only needs to be two or more. A center of the magnet insertion hole 51 in the circumferential direction is a pole center, and a portion between adjacent magnet insertion holes 51 is an inter-pole portion.

The magnet 55 is a rare earth magnet. More specifically, the magnet 55 is a neodymium magnet containing Nd (neodymium), Fe (iron) and B (boron), or a samarium cobalt magnet containing Sm (samarium) and Co (cobalt). Instead of the rare earth magnet, a ferrite magnet that contains Fe may be used.

Although one magnet 55 is disposed in each magnet insertion hole 51 in this example, two or more magnets 55 may be disposed in each magnet insertion hole 51.

A flux barrier 52 which is an aperture is formed at each end of the magnet insertion hole 51 in the circumferential direction. The flux barrier 52 prevents shortcircuit of a magnetic flux between adjacent magnets 55.

Core holes 54 are formed on the inner side in the radial direction of the magnet insertion holes 51 of the rotor core 50. In this example, each core hole 54 is formed at a position corresponding to the pole center. The core holes 54 are formed to reduce the amount of core material of the rotor core 50. However, the core holes 54 are not necessarily formed.

In a section perpendicular to the axial direction, the rotor core 50 has an outer circumference of a so-called flower shape such that the rotor core 50 has a maximum diameter at the pole center of each magnetic pole and a minimum diameter at each inter-pole portion. The outer circumference of the rotor core 50 is not limited to such a flower shape and may be a circular shape.

The resin portion 6 is provided between the shaft 7 and the rotor core 50. The resin portion 6 holds the shaft 7 and the rotor core 50 in such a manner that the shaft 7 and the rotor core 50 are apart from each other. The resin portion 6 is formed of a nonmagnetic body. The resin portion 6 is formed of a thermoplastic resin such as polybutylene terephthalate (PBT). The above-described core holes 54 of the rotor core 50 are filled with the same resin as the resin portion 6 to constitute filling portions 61.

As illustrated in FIG. 1, the resin portion 6 also covers both ends of the rotor core 50 in the axial direction. The resin portion 6 holds a sensor magnet 56 on the counter-load side of the rotor core 50. The sensor magnet 56 is a magnet having an annular shape about the axis C1 and has the same number of magnetic poles as that of the magnets 55. The sensor magnet 56 is magnetized in the axial direction. The magnetic flux of the sensor magnet 56 is detected by a magnetic sensor 44 described later.

Although the resin portion 6 is provided between the shaft 7 and the rotor core 50 in this example, it is also possible to fit the shaft 7 into a center hole of the rotor core 50 without providing the resin portion 6.

Although the Inner Permanent Magnet (IPM) rotor in which the magnets 55 are embedded in the rotor core 50 has been described, it is also possible to employ a Surface Permanent Magnet (SPM) motor in which the magnets 55 are attached to the surface of the shaft 7.

### (Configuration of Mold Stator 4)

As described above, the mold stator 4 includes the stator 1 and the mold resin portion 40. The mold resin portion 40 is formed of a thermosetting resin such as a bulk molding compound (BMC). The mold resin portion 40 has an opening 41 on the load side and a bearing support portion 42 on the counter-load side. The rotor 5 is inserted through the opening 41 into a hollow portion inside the mold stator 4.

A metal bracket 73 is attached to the opening 41 of the mold resin portion 40. One bearing 71 that supports the shaft 7 is held by the bracket 73. A cap 74 is attached to the outside of the bracket 73. The bearing support portion 42 of the mold resin portion 40 has an inner circumferential surface of a cylindrical shape. The other bearing 72 supporting the shaft 7 is held by the inner circumferential surface of the bearing support portion 42.

A circuit board 43 is held by the mold resin portion 40 on the counter-load side of the stator 1. The circuit board 43 is a printed board on which a driving circuit such as a power transistor for driving the motor 100 is mounted. Lead wires 45 are wired on the circuit board 43. The lead wires 45 on the circuit board 43 are drawn to the outside of the motor 100 via a lead wire outlet component 46 attached to an outer circumferential portion of the mold resin portion 40.

The magnetic sensor 44 is mounted on a surface of the circuit board 43 on the stator 1 side so that the magnetic sensor 44 faces the sensor magnet 56 in the axial direction. The magnetic sensor 44 is formed of, for example, a Hall effect element, a Magneto Resistive (MR) element, a Giant Magneto Resistive (GMR) element, or a magnetic impedance element.

The magnetic sensor 44 outputs a binary signal when the magnetic sensor 44 faces the N-poles and the S-poles of the sensor magnet 56 in turn. A position of the magnet 55, i.e., a rotational position of the rotor 5, is detected based on the output signal of the magnetic sensor 44.

It is also possible to perform sensorless control by estimating the rotational position of the rotor 5 based on a current or voltage applied to coils 3 without providing the sensor magnet 56 and the magnetic sensor 44.

The bracket 73 is press-fitted into an annular portion provided at an outer periphery of the opening 41 of the mold resin portion 40. The bracket 73 is formed of a metal having conductivity, for example, a galvanized steel sheet. The cap 74 is attached to the outside of the bracket 73 and prevents water or the like from entering the bearing 71.

In this example, the stator 1 is covered with the mold resin portion 40. However, instead of providing the mold resin portion 40, the outer circumference of the stator 1 may be fitted inside a cylindrical shell formed of metal.

As illustrated in FIG. 2, the stator 1 surrounds the rotor 5 from an outer side in the radial direction. The stator 1 includes a stator core 10, insulators 2 provided on the stator core 10, and the coils 3 wound on the stator core 10 via the insulators 2.

The stator core 10 is formed of a plurality of stacking elements that are stacked in the axial direction and fixed together by crimping, welding, or bonding. The stacking elements are, for example, electromagnetic steel sheets. The thickness of each stacking steel sheet is, for example, 0.2 mm to 0.5 mm. The stator core 10 has a yoke 11 that extends annularly in the circumferential direction about the center axis C1 and a plurality of teeth 12 extending inward in the radial direction (toward the center axis C1) from the yoke 11.

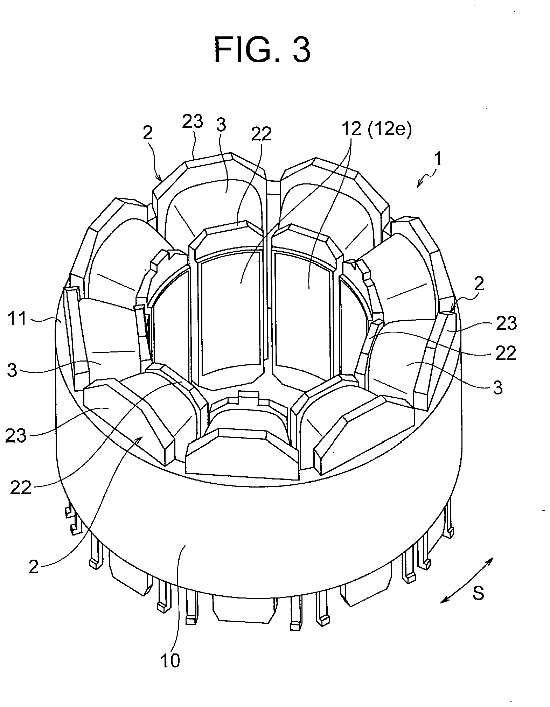

A slot 13 is formed between the adjacent teeth 12. An end surface (an end surface 12e illustrated in FIG. 3) on the inner side in the radial direction of the tooth 12 faces an outer circumferential surface of the rotor 5. The number of teeth 12 is nine in this example. The number of teeth 12 is not limited to nine and only needs to be two or more.

Crimping portions 18 and 19 for fixing the above-described stacking elements together are respectively formed on the yoke 11 and teeth 12. The positions of the crimping portions are not limited to these positions. The stacking elements may be fixed not only by crimping, but also by welding or bonding.

The stator core 10 has a configuration such that the stator core 10 is divided into a plurality of connecting cores 10A each including one tooth 12. The connecting cores 10A are divided at split surfaces 14 formed in the yoke 11. The split surfaces 14 extend outward in the radial direction from the inner circumferential surface of the yoke 11. A thin portion that is plastically deformable is formed between an outer end of the split surface 14 and the outer circumferential surface of the yoke 11. By plastic deformation of the thin portions, the stator core 10 can be expanded in a band shape.

The stator core 10 is not limited to a combination of the connecting cores 10A and may be formed of annular stacking steel sheets which are stacked in the axial direction.

The insulator 2 formed of a resin is provided so as to surround the tooth 12 of the stator core 10. The coil 3 is composed of a magnet wire and wound around the tooth 12 via the insulator 2. The coil 3 is housed in the slot 13 between adjacent teeth 12.

### (Configuration of Insulator 2)

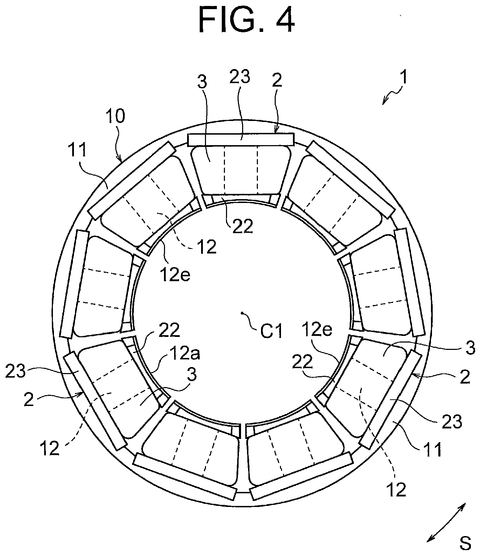

FIGS. 3 and 4 are a perspective view and a top view illustrating the stator core 10 and the insulators 2. The insulator 2 is formed of an insulating resin. For example, the insulator 2 is formed of a thermoplastic resin such as polybutylene terephthalate (PBT), polyphenylene sulfide (PPS), liquid crystal polymer (LCP), or polyethylene terephthalate (PET). The insulator 2 is formed by molding the resin integrally with the stator core 10 or by assembling a molded body of the resin to the stator core 10.

Since the stator core 10 is formed of the connecting cores 10A (FIG. 2) as described above, the insulators 2 can be molded integrally with the teeth 12, and then the coils 3 can be wound around the teeth 12 via the insulators 2 in a state where the stator core 10 is expanded in a band shape.

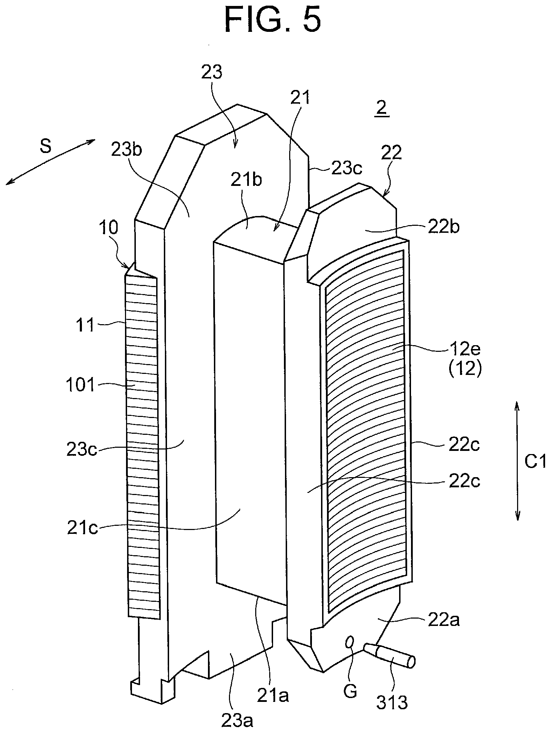

FIG. 5 is a perspective view illustrating one tooth 12 of the stator core 10 and the insulator 2 surrounding the tooth 12. The insulator 2 has a winding portion 21 that surrounds the tooth 12 from both sides in the circumferential direction and from both sides in the axial direction, an inner wall portion 22 adjacent to and on the inner side in the radial direction of the winding portion 21, and an outer wall portion 23 adjacent to and on the outer side in the radial direction of the winding portion 21.

The inner wall portion 22 is provided at a tip end on the inner side of the tooth 12 in the radial direction. The outer wall portion 23 is provided to span the yoke 11 and a root portion on the outer side of the tooth 12 in the radial direction. The inner wall portion 22 and the outer wall portion 23 face each other in the radial direction. The coil 3 (FIG. 3) is wound around the winding portion 21. The inner wall portion 22 and the outer wall portion 23 guide the coil 3 from both sides in the radial direction.

The winding portion 21 has a first end portion 21a located at one side of the tooth 12 in the axial direction, a second end portion 21b located at the other side of the tooth 12 in the axial direction, and a pair of side portions 21c located at both sides of the tooth 12 in the circumferential direction.

The inner wall portion 22 has a first wall portion 22a located at one side of the tooth 12 in the axial direction, a second wall portion 22b located at the other side of the tooth 12 in the axial direction, and a pair of side wall portions 22c located at both sides of the tooth 12 in the circumferential direction.

The outer wall portion 23 has a first wall portion 23a located at one side of the tooth 12 in the axial direction, a second wall portion 23b located at the other side of the tooth 12 in the axial direction, and a pair of side portions 23c located at both sides of the tooth 12 in the circumferential direction.

The first end portion 21a of the winding portion 21, the first wall portion 22a of the inner wall portion 22, and the first wall portion 23a of the outer wall portion 23 are located on the same side as each other in the axial direction. The second end portion 21b of the winding portion 21, the second wall portion 2b of the inner wall portion 22, and the second wall portion 23b of the outer wall portion 23 are located on the same side as each other in the axial direction.

As illustrated in FIG. 5, a gate mark G is formed on the first wall portion 22a of the inner wall portion 22. The gate mark G is a portion corresponding to a gate 313 of a molding mold used for molding of the insulator 2. The gate mark G is formed, for example, as a concave portion or a convex portion on a surface on the inner side in the radial direction of the first wall portion 22a of the inner wall portion 22.

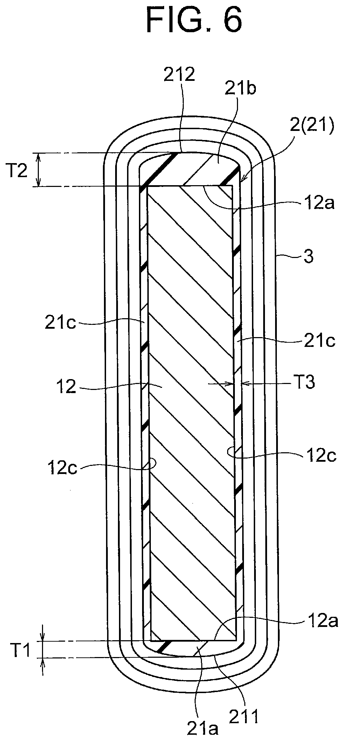

FIG. 6 is a sectional view illustrating the tooth 12, the winding portion 21 of the insulator 2, and the coil 3. FIG. 6 is a sectional view in a plane perpendicular to an extending direction of the tooth 12.

The tooth 12 has a rectangular sectional shape in a section perpendicular to the extending direction of the tooth 12. End surfaces 12a and 12b of the tooth 12 in the axial direction are covered with the first end portion 21a and the second end portion 21b of the winding portion 21. End surfaces 12c of the tooth 12 in the circumferential direction are covered with the side portions 21c of the winding portion 21.

The first end portion 21a of the winding portion 21 has a maximum thickness T1 in the axial direction. That is, the first end portion 21a of the winding portion 21 has an outer circumferential surface 211 on a side opposite to the end surface 12a of the tooth 12. A maximum distance from the end surface 12a of the tooth 12 to the outer circumferential surface 211 defines the maximum thickness T1.

In FIG. 6, the outer circumferential surface 211 of the first end portion 21a is shown as a curved surface projecting on a side opposite to the tooth 12 in the axial direction, but the outer circumferential surface 211 may be a flat surface.

The second end portion 21b of the winding portion 21 has a maximum thickness T2 in the axial direction. That is, the second end portion 21b of the winding portion 21 has an outer circumferential surface 212 on a side opposite to the end surface 12b of the tooth 12. A maximum distance from the end surface 12b of the tooth 12 to the outer circumferential surface 212 defines the maximum thickness T2.

In FIG. 6, the outer circumferential surface 212 of the second end portion 21b is shown as a curved surface projecting on a side opposite to the tooth 12 in the axial direction, but the outer circumferential surface 212 may be a flat surface.

The side portion 21c of the winding portion 21 has a maximum thickness T3 in the circumferential direction. The thickness of the side portion 21c is constant in the axial direction in FIG. 6, but is not necessarily constant.

The maximum thicknesses T1, T2 and T3 of the portions 21a, 21b, and 21c of the winding portion 21 satisfy T3 < T1 < T2.

In other words, in the winding portion 21, the maximum thickness T1 of the first end portion 21a on the same side as the gate mark G in the axial direction is smaller than the maximum thickness T2 of the second end portion 21b on the side opposite to the gate mark G. The maximum thickness T3 of the side portion 21c is smaller than each of the maximum thicknesses T1 and T2.

In a molding step of the insulator 2, the resin exhibits higher fluidity at a position closer to the gate which is an inlet for the resin. Therefore, the first end portion 21a of the winding portion 21 is more suitable to be thinned than the second end portion 21b of the winding portion 21. This will be described later.

### (Manufacturing Method of Motor 100)

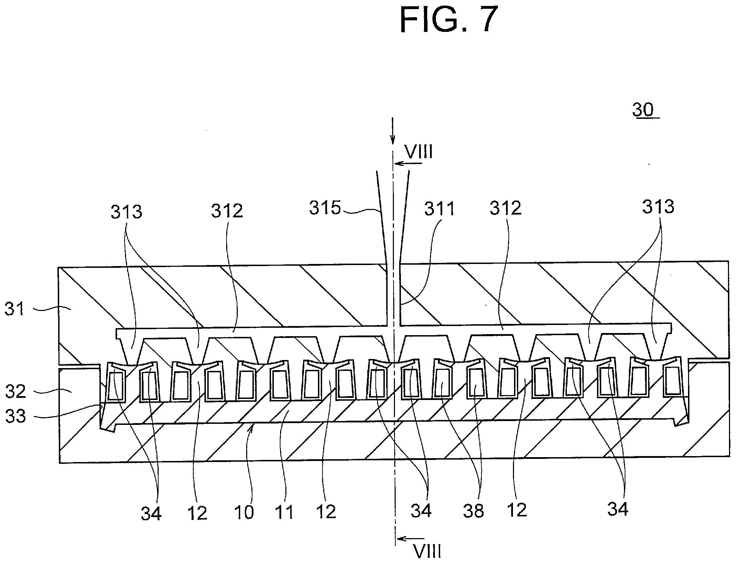

Next, a manufacturing process of the motor 100 will be described. FIG. 7 is a diagram illustrating a molding mold 30 for molding the insulators 2. The molding mold 30 has an upper mold 31 which is a movable mold, and a lower mold 32 which is a stationary mold. A cavity 33 is formed between the upper and lower molds 31 and 32.

The stator core 10 is placed in the cavity 33 in such a manner that the stator core 10 is expanded in a band shape. In the cavity 33, a molding space 34 is formed for each tooth 12 of the stator core 10. Cores 38 are disposed on both sides of each tooth 12 in the cavity 33 for securing spaces for disposing the coils 3 (FIG. 6).

The stator core 10 is placed in the cavity 33 in such a manner that the stator core 10 is expanded in a band shape in this example, but the stator core 10 may be annularly placed in the cavity 33.

The upper mold 31 has a sprue 311, runners 312 and gates 313 for injecting resin into the cavity 33. The sprue 311 is a flow path into which molten resin flows from a cylinder 315 as an injection device. The gate 313 are inlets provided each for one tooth 12 in the cavity 33. The runners 312 are flow paths that branch off from the sprue 311 and lead to the gates 313.

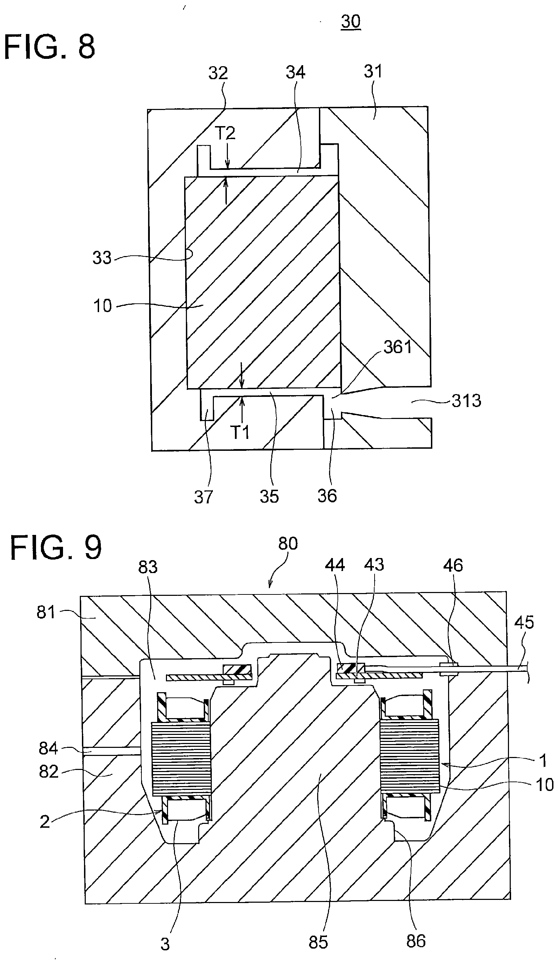

FIG. 8 is a sectional view taken along line VIII-VIII illustrated in FIG. 7 as seen in a direction indicated by arrows. The cavity 33 has a winding portion area 35 for forming the winding portion 21, an inner wall portion area 36 for forming the inner wall portion 22, and an outer wall portion area 37 for forming the outer wall portion 23, for each of the insulators 2.

The gate 313 described above is open in a portion 361 for forming the first wall portion 22a (FIG. 5) of the inner wall portion 22, of the inner wall portion area 36 of the cavity 33. The resin injected into the cavity 33 from the gate 313 flows from the side for forming the first end portion 21a and the first wall portions 22a and 23a (FIG. 5) toward the side for forming the second end portion 21b and the second wall portions 22b and 23b (FIG. 5).

FIG. 9 is a sectional view illustrating a molding mold 80 used to integrally mold the stator 1 and the shaft 7 with a mold resin.

The molding mold 80 has an upper mold 81 which is a movable mold, and a lower mold 82 which is a stationary mold. A cavity 83 is formed between the upper and lower molds 81 and 82. A gate 84 is formed in the lower mold 82 for injecting a resin into the cavity 83.

A core 85 having a columnar shape is formed in the lower mold 82, and the core 85 protrudes within the cavity 83. The core 85 is a portion that engages with the inner side of the stator core 10. A larger-diameter portion 86 is formed at the lower end of the core 85, and the larger-diameter portion 86 protrudes outward in the radial direction from the core 85. The larger-diameter portion 86 is a portion corresponding to the opening 41 (FIG. 1) of the mold stator 4.

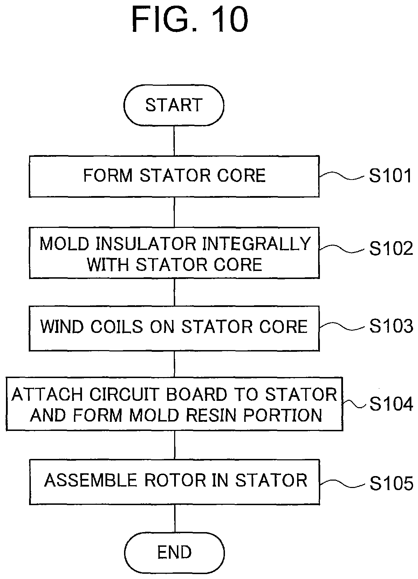

FIG. 10 is a flowchart illustrating the manufacturing process of the motor 100. First, a plurality of stacking elements are stacked in the axial direction and fixed together by crimping or the like, thereby forming the stator core 10 (step S101).

Next, the insulators 2 are integrally molded with the stator core 10 (step S102). That is, the upper mold 31 of the molding mold 30 illustrated in FIGS. 7 and 8 is moved upward to open the cavity 33, and the stator core 10 is placed in the cavity 33. Then, the upper mold 31 is moved downward to close the cavity 33. In this state, a resin such as PBT in a molten state is injected from the cylinder 315 into the cavity 33 through the sprue 311, the runners 312, and the gates 313.

Then, the resin in the cavity 33 is cured by cooling the molding mold 30. Within the cavity 33, the resin cured in the winding portion area 35 forms the winding portion 21, the resin cured in the inner wall portion area 36 forms the inner wall portion 22, and the resin cured in the outer wall portion area 37 forms the outer wall portion 23.

After curing the resin in the cavity 33, the upper mold 31 of the molding mold 30 is moved upward to open the cavity 33, and the stator core 10 integrally molded with the insulators 2 is taken out of the molding mold 30.

Next, the coils 3 are wound on the stator core 10 via the insulators 2 (step S103) . In this stage, the stator core 10 is expanded in a band shape, and thus the coils 3 can be easily wound on the stator core 10.

After the coils 3 are wound on the stator core 10, the stator core 10 is bent in an annular shape and both ends of the stator core 10 are welded to each other, so that the stator 1 illustrated in FIG. 4 is formed.

Next, the circuit board 43 is attached to the stator 1. The stator 1 and the circuit board 43 are placed in the molding mold 80, and the mold resin portion 40 is formed (step S104). Specifically, the upper mold 81 of the molding mold 80 illustrated in FIG. 9 is moved upward to open the cavity 83, and the stator 1 is placed in the cavity 83. Thereafter, the upper mold 81 is moved downward to close the cavity 83, and then the mold resin such as BMC is injected into the cavity 83 through the gate 84. The mold resin injected into the cavity 83 covers the outer circumferential side and the counter-load side of the stator 1.

In a case where a thermosetting resin is used as the mold resin, after injecting the mold resin into the cavity 83, the mold resin in the cavity 83 is cured by heating the molding mold 80. Consequently, the manufacturing of the mold stator 4 in which the stator 1 is covered with the mold resin portion 40 is completed.

Aside from steps S101 to S104, the rotor 5 is formed. Specifically, a plurality of stacking elements are stacked in the axial direction and fixed together by crimping or the like, thereby forming the rotor core 50. Then, the magnets 55 are inserted into the magnet insertion holes 51. Further, the shaft 7, the rotor core 50, the magnets 55, and the sensor magnet 56 are integrally molded with a resin which forms the resin portion 6. In this way, the rotor 5 is formed.

Thereafter, the bearings 71 and 72 are attached to the shaft 7 of the rotor 5, and the rotor 5 is inserted into the inside of the stator 1 through the opening 41 of the mold stator 4 (step S106). Further, the bracket 73 is attached to the opening 41 of the mold stator 4, and the cap 74 is attached to the outside of the bracket 15. Consequently, the manufacturing of the motor 100 illustrated in FIG. 1 is completed.

In the manufacturing process of the motor 100 illustrated in FIG. 10, steps S101 to S104 correspond to the manufacturing process of the stator 1 (the manufacturing method of the stator 1).

### (Functions)

A resistance R of the coil 3 is expressed by ρ × L/S using a resistivity p, a length L, and a cross-sectional area S of the coil 3. In other words, the resistance R of the coil 3 increases in proportion to the length L of the coil 3. Therefore, as the length per turn of the coil 3 wound around the tooth 12 (hereinafter referred to as a winding length) decreases, the resistance R decreases. As the resistance R decreases, the copper loss which is one of the motor losses decreases, and thus the motor efficiency increases. In order to shorten the winding length of the coil 3, it is effective to reduce the thickness of the winding portion 21 of the insulator 2 around which the coil 3 is wound.

If the number of turns of the coil 3 is the same, as a wire diameter of the coil 3 increases, the cross-sectional area S of the coil 3 increases, and thus the resistance R decreases. The number of turns of the coil 3 affects the maximum output of the motor 100. Thus, after the number of turns of the coil 3 is determined, the wire diameter of the coil 3 is generally selected to be as large as possible within a range such that the coil 3 can be housed in the slot 13.

As the maximum thickness T3 of the side portion 21c of the winding portion 21 of the insulator 2 is reduced, the slot 13 can be made larger. In other words, reducing the maximum thickness T3 of the side portion 21c of the winding portion 21 has the effect of shortening the winding length of the coil 3 and has the effect of increasing the cross-sectional area of the coil 3.

In contrast, reducing the maximum thicknesses T1 and T2 of the first end portion 21a and the second end portion 21b of the winding portion 21 only contributes to the shortening of the winding length of the coil 3. That is, the maximum thickness T3 of the winding portion 21 in the circumferential direction has a greater contribution to improvement in the motor efficiency than the maximum thicknesses T1 and T2 of the winding portion 21 in the axial direction.

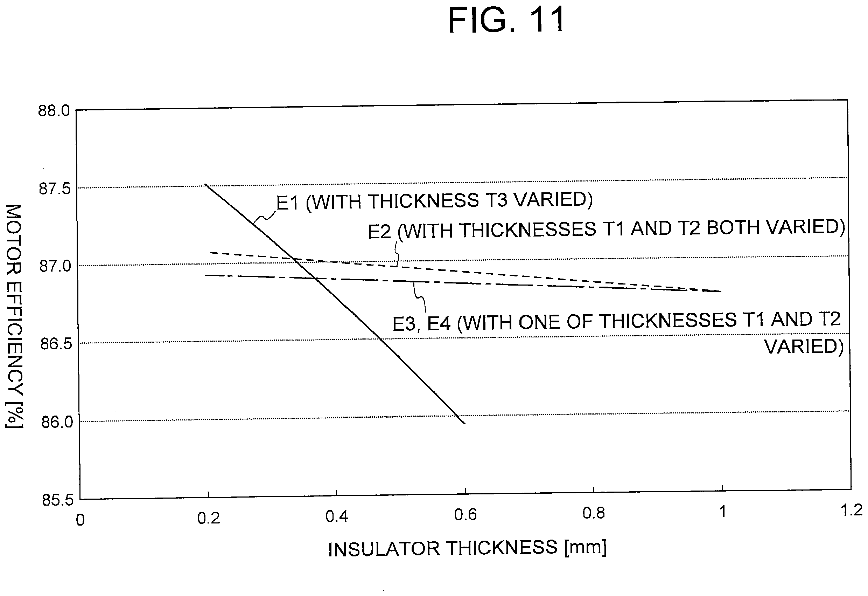

FIG. 11 shows simulation results regarding the contribution of the maximum thicknesses T1, T2, and T3 to improvement in the motor efficiency. The motor efficiency is a ratio (%) of an output (rotational speed × torque) to a power input to the motor 100.

In FIG. 11, a line E1 indicates a change in the motor efficiency when the maximum thickness T3 is varied while the maximum thicknesses T1 and T2 are set constant at 1 mm. A line E2 indicates a change in the motor efficiency when the maximum thicknesses T1 and T2 are varied while the maximum thickness T3 is set constant at 0.4 mm.

A line E3 indicates a change in the motor efficiency when the maximum thickness T1 is varied while the maximum thickness T2 is set constant at 1 mm and the maximum thickness T3 is set constant at 0.4 mm. A line E4 indicates a change in the motor efficiency when the maximum thickness T2 is varied while the maximum thickness T1 is set constant at 1 mm and the maximum thickness T3 is set constant at 0.4 mm.

From FIG. 11, it is understood that the motor efficiency is most improved when the maximum thickness T3 is reduced as indicated by the line E1.

It is difficult to reduce all the maximum thicknesses T1, T2, and T3 of the winding portion 21 of the insulator 2. Thus, in the first embodiment, the maximum thickness T3 of the side portion 21c is made the smallest, i.e., T3 < T1, T2 is satisfied. This enhances the effect of improving the motor efficiency.

However, the maximum thickness T3 of the side portion 21c of the winding portion 21 is affected by a positional accuracy of the stator core 10 which is placed in the molding mold 30, and thus there is a limit to reduction in the maximum thickness T3. For this reason, it is necessary to reduce the maximum thickness T1 of the first end portion 21a or the maximum thickness T2 of the second end portion 21b, in addition to the maximum thickness T3.

In the molding step of the insulator 2, the thermoplastic resin is heated and brought into a molten state in the cylinder 315, and then injected into the cavity 33 through the sprue 311, the runners 312, and the gates 313 as described with reference to FIG. 7.

In general, the temperature of the molding mold 30 is much lower than the temperature of the cylinder 315, and the temperature of the stator core 10 is lower than or equal to the temperature of the molding mold 30. Thus, as the resin flows through the sprue 311, the runners 312, and the gates 313, the temperature of the resin decreases.

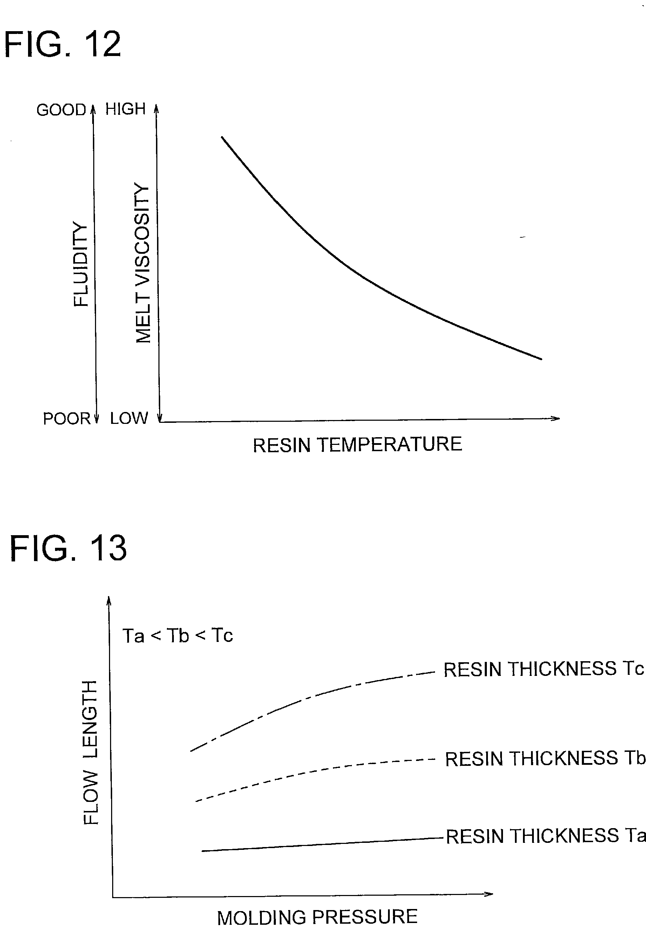

FIG. 12 illustrates a relationship between the temperature and each of the viscosity and the fluidity of a thermoplastic resin. From FIG. 12, it is understood that the viscosity and the fluidity of the resin are reduced as the temperature of the resin decreases.

When the resin is injected through the cylinder 315 into the molding mold 30, molding pressure is applied to the resin. FIG. 13 shows the relationship between the molding pressure and the flow length for three different resin thicknesses Ta, Tb, and Tc (Ta < Tb < Tc). From FIG. 13, it is understood that, as the molding pressure increases, the flow length increases. It is also understood that an increase in the flow length with an increase in the molding pressure is small when the resin thickness is small.

As illustrated in FIG. 8, the gate 313 is open in the portion 361 for forming the first wall portion 22a (FIG. 5) of the inner wall portion 22 in the cavity 33. In the cavity 33, as a position gets closer to the gate 313, the temperature of the resin increases and the molding pressure increases, and thus the fluidity of the resin increases.

Meanwhile, the thickness of the side portion 21c is the smallest in the winding portion 21. Thus, when the resin passes through a portion for forming the side portion 21c of the winding portion 21 in the cavity 33, the heat of the resin is taken by the molding mold 30 and the stator core 10, and thus the temperature of the resin may decrease and the resin may be partially cured. Thus, the molding pressure is less likely to be transmitted uniformly throughout the entire cavity 33.

From the above, it can be said that the fluidity of the resin is higher at the gate 313 side in the cavity 33 than at the opposite side to the gate 313 in the cavity 33, and thus the gate 313 side in the cavity 33 is more suitable for thinning.

For this reason, in the first embodiment, the maximum thickness T1 of the first end portion 21a closer to the gate 313 is made smaller than the maximum thickness T2 of the second end portion 21b farther from the gate 313. In other words, the maximum thicknesses T1, T2, and T3 satisfy T3 < T1 < T2 to achieve the thinning of the insulator 2.

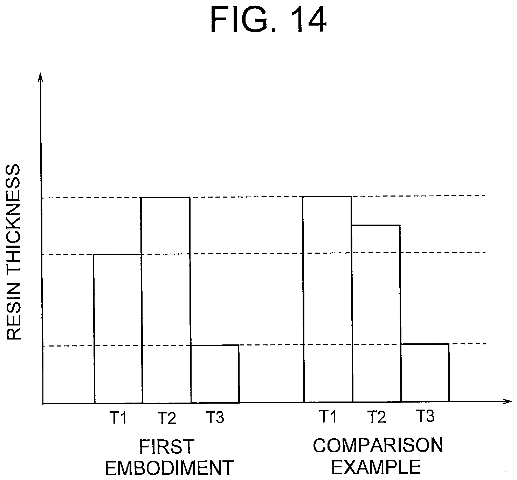

FIG. 14 is a schematic diagram illustrating how much the maximum thicknesses T1, T2, and T3 of the insulator 2 can be reduced in the first embodiment where T3 < T1 < T2 is satisfied, in comparison with a comparison example where T3 < T2 < T1 is satisfied.

As described above, the second end portion 21b of the winding portion 21 is far from the gate 313, and thus the fluidity of the resin is low at the second end portion 21b. Thus, when the maximum thickness T2 of the second end portion 21b is intended to be reduced, the resin does not sufficiently spread over the second end portion 21b, which may cause molding defects.

In contrast, the first end portion 21a of the winding portion 21 is close to the gate 313 and thus the fluidity of the resin is high. Thus, molding defects do not occur even when the maximum thickness T1 of the first end portion 21a is reduced. Therefore, the maximum thickness T1 of the first end portion 21a can be reduced effectively.

The gate 313 leaves the gate mark G, which is a concave portion or a convex portion, on the surface of the first wall portion 22a (FIG. 5) of the inner wall portion 22 of the insulator 2. The location of the gate mark G is not limited to the first wall portion 22a of the inner wall portion 22. The gate mark G may be formed on the first wall portion 23a of the outer wall portion 23.

### (Effects of Embodiment)

As described above, in the first embodiment, the winding portion 21 of the insulator 2 has the first end portion 21a located at one side of the tooth 12 in the circumferential direction, the second end portion 21b located at the other side of the tooth 12 in the axial direction, and the side portion 21c located at one side of the tooth 12 in the circumferential direction. The maximum thickness T1 of the first end portion 21a in the axial direction, the maximum thickness T2 of the second end portion 21b in the axial direction, and the maximum thickness T3 of the side portion 21c in the circumferential direction satisfy T3 < T1 < T2. The insulator 2 has the gate mark G on the same side as the first end portion 21a in the axial direction. Consequently, the thickness of the insulator 2 can be reduced effectively, and thus the winding density of the coils 3 can be improved and the motor efficiency can be improved.

### Second Embodiment

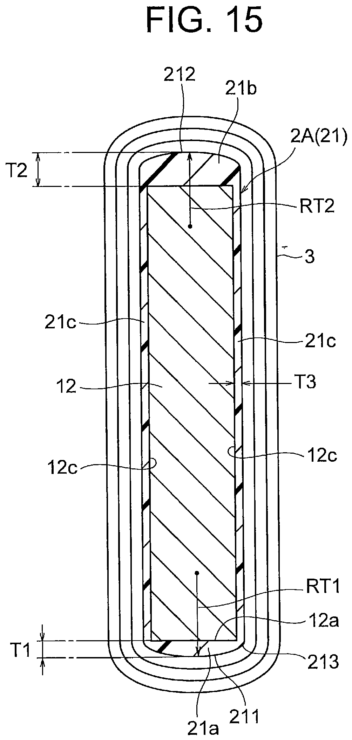

Next, a second embodiment will be described. FIG. 15 is a sectional view illustrating the tooth 12, the winding portion 21 of an insulator 2A, and the coil 3 in the second embodiment. The winding portion 21 of the insulator 2A has the first end portion 21a, the second end portion 21b, and the side portions 21c as in the first embodiment.

As in the insulator 2 of the first embodiment, the maximum thicknesses T1, T2, and T3 of the first end portion 21a, the second end portion 21b, and the side portion 21c of the winding portion 21 of the insulator 2A satisfy T3 < T1 < T2, and the gate mark G (FIG. 5) is provided on the same side as the first end portion 21a in the axial direction.

In the second embodiment, the outer circumferential surface 211 of the first end portion 21a is a curved surface projecting on a side opposite to the tooth 12 in the axial direction. Further, the outer circumferential surface 211 is an arc-shaped surface having a radius of curvature RT1 in a plane perpendicular to the extending direction of the tooth 12.

The outer circumferential surface 212 of the second end portion 21b is a curved surface projecting on a side opposite to the tooth 12 in the axial direction. Further, the outer circumferential surface 212 is an arc-shaped surface having a radius of curvature RT2 in a plane perpendicular to the extending direction of the tooth 12.

The radius of curvature RT1 of the outer circumferential surface 211 of the first end portion 21a and the radius of curvature RT2 of the outer circumferential surface 212 of the second end portion 21b satisfy RT1 > RT2.

If the radius of curvature RT1 is small, the thickness of a corner portion 213 between the first end portion 21a and the side portion 21c may be extremely small when the maximum thickness T1 of the first end portion 21a is reduced. Thus, the resin may not spread over the entire insulator 21A during molding, which may cause molding defects.

In the second embodiment, the radius of curvature RT1 of the outer circumferential surface 211 of the first end portion 21a is larger than the radius of curvature RT2 of the outer circumferential surface 212 of the second end portion 21b. Thus, the corner portions 213 are prevented from being extremely thin even when the maximum thickness T1 of the first end portion 21a of the winding portion 21 is reduced. Thus, occurrence of molding defects is suppressed.

The motor of the second embodiment is configured in the same manner as the motor 100 of the first embodiment except for the above-described points.

As described above, in the second embodiment, the radius of curvature RT1 of the outer circumferential surface 211 of the first end portion 21a of the winding portion 21 of the insulator 2A and the radius of curvature RT2 of the outer circumferential surface 212 of the second end portion 21b of the insulator 2A satisfy RT1 > RT2. Thus, the maximum thickness T1 of the first end portion 21a of the winding portion 21 of the insulator 2A can be further reduced without causing molding defects. Consequently, the winding density of the coils 3 can be improved, and the motor efficiency can be improved.

The outer circumferential surface 211 of the first end portion 21a and the outer circumferential surface 212 of the second end portion 21b are described as arc-shaped curved surfaces. However, the outer circumferential surfaces 211 and 212 are not necessarily arc-shaped surfaces, and only need to be curved surfaces whose radii of curvature are defined.

The maximum thicknesses T1, T2, and T3 of the winding portion 21 of the insulator 2A have been described to satisfy T3 < T1 < T2. However, in the second embodiment, the effect of reducing the maximum thickness T1 can be obtained as long as RT1 > RT2 and T1 < T2 are satisfied.

### Third Embodiment

Next, a third embodiment will be described. FIG. 16(A) is a sectional view illustrating the tooth 12, the winding portion 21 of an insulator 2B, and the coil 3 in the third embodiment. The winding portion 21 of the insulator 2B has the first end portion 21a, the second end portion 21b, and the side portions 21c as in the first embodiment.

As in the insulator 2 of the first embodiment, the maximum thicknesses T1, T2, and T3 of the first end portion 21a, the second end portion 21b, and the side portion 21c of the winding portion 21 of the insulator 2B satisfy T3 < T1 < T2, and the gate mark G (FIG. 5) is provided on the same side as the first end portion 21a in the axial direction.

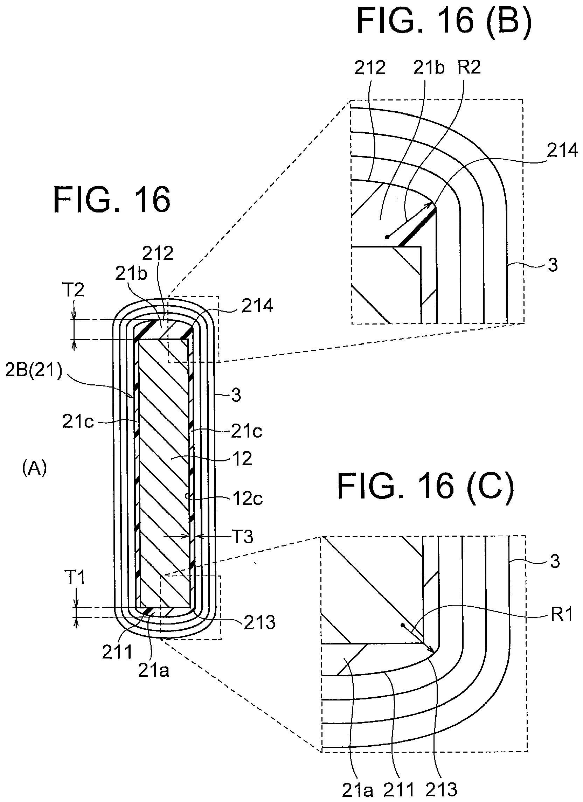

The insulator 2B of the third embodiment has corner portions 213 as first corner portions between the first end portion 21a and the side portions 21c. As illustrated in FIG. 16(C) in an enlarged scale, each corner portion 213 is an arc-shaped surface having a radius of curvature R1 in a plane perpendicular to the extending direction of the tooth 12.

The insulator 2B has corner portions 214 as second corner portions between the second end portion 21b and the side portions 21c. As illustrated in FIG. 16(B) in an enlarged scale, each corner portion 214 is an arc-shaped surface having a radius of curvature R2 in a plane perpendicular to the extending direction of the tooth 12.

The radius of curvature R1 of the corner portion 213 and the radius of curvature R2 of the corner portion 214 satisfy R1 < R2.

Since the insulator 2B is molded using the molding mold 30 (FIG. 7), the corner portions 213 and 214 of the winding portion 21 are both curved surfaces because of the shape constraints of the molding mold. Meanwhile, since the tooth 12 is formed of a laminated body of punched stacking steel sheets, the tooth 12 has four corners of right angles in the section.

Therefore, if the radius of curvature of each corner portion 213 of the insulator 2B is large, the thickness of the corner portion 213 covering the corner of the tooth 12 may be extremely small when the maximum thickness T1 of the first end portion 21a is reduced. In other words, the resin may not spread over the entire insulator 2B during molding.

In the third embodiment, the radius of curvature R1 of each corner portion 213 on the first end portion 21a side is smaller than the radius of curvature R2 of each corner portion 214 on the second end portion 21b side. Consequently, the thicknesses of the corner portions 213 covering the corners of the tooth 12 are prevented from being extremely small, and thus occurrence of molding defects can be suppressed.

Further, the radius of curvature R1 of the corner portion 213 and the maximum thickness T1 of the first end portion 21a satisfy R1 ≤ T1.

If the radius of curvature R1 of each corner portion 213 is larger than the maximum thickness T1 of the first end portion 21a, the thickness of the corner portion 213 covering the corner of the tooth 12 may be smaller than the thickness of the side portion 21c in the case where the outer circumferential surface 211 of the first end portion 21a is close to a flat surface. In other words, the resin may not spread over the entire insulator 2B during molding.

In the third embodiment, the radius of curvature R1 of each corner portion 213 is smaller than or equal to the maximum thickness T1 of the first end portion 21a. Therefore, even when the outer circumferential surface 211 of the first end portion 21a is close to a flat surface, the thickness of the corner portion 213 can be kept at a thickness with which resin molding is possible.

As described in the second embodiment, the outer circumferential surfaces 211 and 212 of the first end portion 21a and the second end portion 21b may be arc-shaped curved surfaces, and their radii of curvature RT1 and RT2 (FIG. 15) may satisfy RT1 > RT2.

The motor of the third embodiment is configured in the same manner as the motor 100 of the first embodiment except for the above-described points.

As described above, in the third embodiment, the radius of curvature R1 of the corner portion 213 between the first end portion 21a and the side portion 21c is smaller than the radius of curvature R2 of the corner portion 214 between the second end portion 21b and the side portion 21c. Thus, the maximum thickness T1 of the first end portion 21a of the winding portion 21 of the insulator 2B can be further reduced while suppressing occurrence of molding defects. Therefore, the winding density of the coils 3 can be improved, and the motor efficiency can be improved.

### (Air Conditioner)

Next, an air conditioner to which the motor of each of the above-described embodiments is applicable will be described. FIG. 17(A) is a diagram illustrating a configuration of an air conditioner 500 to which the motor 100 of the first embodiment is applied. The air conditioner 500 includes an outdoor unit 501, an indoor unit 502, and a refrigerant pipe 503 that connects the units 501 and 502.

The outdoor unit 501 includes an outdoor fan 510 which is, for example, a propeller fan. The indoor unit 502 includes an indoor fan 520 which is, for example, a cross flow fan. The outdoor fan 510 includes the impeller 505 and the motor 100 driving the impeller 505. The indoor fan 520 includes an impeller 521 and the motor 100 that drives the impeller 521. Both the motors 100 have the configuration described in the first embodiment. FIG. 17(A) also illustrates a compressor 504 that compresses refrigerant.

FIG. 17(B) is a sectional view of the outdoor unit 501. The motor 100 is supported by a frame 509 disposed in a housing 508 of the outdoor unit 501. The impeller 505 is attached to the shaft 7 of the motor 100 via a hub 506.

In the outdoor fan 510, the impeller 505 attached to the shaft 7 rotates by the rotation of the rotor 5 of the motor 100 to blow air to the outdoors. During a cooling operation, heat released when the refrigerant compressed by the compressor 504 is condensed in a condenser (not illustrated) is discharged to the outdoors by the air blown from the outdoor fan 510. Similarly, in the indoor fan 520 (FIG. 17(A)), the impeller 521 rotates by the rotation of the rotor 5 of the motor 100 to blow air from which heat is taken in an evaporator (not shown), to the indoors.

The motor 100 of the above-described first embodiment has high motor efficiency because of the improved winding density of the coils 3. Thus, the operation efficiency of the air conditioner 500 can be improved.

Instead of the motor 100 of the first embodiment, the motor of the second or third embodiment may be used. Although the motor 100 is used as a driving source of the outdoor fan 510 and as a driving source of the indoor fan 520 in this example, it is sufficient that that the motor 100 is used as at least one of the driving sources.

The motor 100 of each embodiment can also be mounted on any electric apparatuses other than the fan of the air conditioner.

Although the desirable embodiments of the present invention have been specifically described above, the present invention is not limited to the above-described embodiments, and various modifications or changes may be made to those embodiments without departing from the scope of the present invention.

### DESCRIPTION OF REFERENCE CHARACTERS

1 stator; 2, 2A, 2B insulator; 3 coil; 4 mold stator; 5 rotor; 6 resin portion; 7 shaft; 10 stator core; 10A connecting core; 11 yoke; 12 tooth; 13 slot; 21 winding portion; 21a first end portion; 21b second end portion; 21c side portion; 22 inner wall portion; 22a first wall portion; 22b second wall portion; 22c side wall portion; 23 outer wall portion; 23a first wall portion; 23b second wall portion; 23c side wall portion; 30 molding mold; 31 upper mold; 32 lower mold; 33 cavity; 40 mold resin portion; 41 opening; 42 bearing support portion; 43 circuit board; 44 magnetic sensor; 50 rotor core; 51 magnet insertion hole; 55 magnet; 56 sensor magnet; 80 molding mold; 81 upper mold; 82 lower mold; 83 cavity; 100 motor; 211 curved surface; 212 curved surface; 311 sprue; 312 runner; 313 gate; 315 cylinder; 500 air conditioner; 501 outdoor unit; 502 indoor unit; 503 refrigerant pipe; 504 compressor; 505 impeller; 510 outdoor fan; 520 indoor fan; 521 impeller.

## Claims

1. A stator comprising:
a stator core having a yoke extending in a circumferential direction about an axis and a tooth extending from the yoke toward the axis;
an insulator having a winding portion surrounding the tooth; and
a coil wound around the winding portion of the insulator,
wherein the winding portion of the insulator has a first end portion located at one side of the tooth in a direction of the axis, a second end portion located at the other side of the tooth in the direction of the axis, and a side portion located at one side of the tooth in the circumferential direction,
wherein the first end portion has a maximum thickness T1 in the direction of the axis, the second end portion has a maximum thickness T2 in the direction of the axis, and the side portion has a maximum thickness T3 in the circumferential direction,
wherein the maximum thicknesses T1, T2 and T3 satisfy T3 < T1 < T2, and
wherein the insulator has a gate mark on the same side as the first end portion in the direction of the axis.

2. A stator comprising:
a stator core having a yoke extending in a circumferential direction about an axis and a tooth extending from the yoke toward the axis;
an insulator having a winding portion surrounding the tooth; and
a coil wound around the winding portion of the insulator,
wherein the winding portion of the insulator has a first end portion located at one side of the tooth in a direction of the axis, a second end portion located at the other side of the tooth in the direction of the axis, and a side portion located at one side of the tooth in the circumferential direction,
wherein the first end portion has a maximum thickness T1 in the direction of the axis, and the second end portion has a maximum thickness T2 in the direction of the axis,
wherein the first end portion has a curved surface having a radius of curvature RT1 and projecting on a side opposite to the tooth, and the second end portion has a curved surface having a radius of curvature RT2 and projecting on a side opposite to the tooth,
wherein the maximum thicknesses T1, T2 and T3 satisfy T1 < T2, and
wherein the radii of curvature RT1 and RT2 satisfy RT1 > RT2, and
wherein the insulator has a gate mark on the same side as the first end portion in the direction of the axis.

3. The stator according to claim 2, wherein the side portion has a maximum thickness T3 in the circumferential direction, and
wherein the maximum thicknesses T1, T2 and T3 satisfy T3 < T1 < T2.

4. The stator according to any one of claims 1 to 3, wherein the winding portion of the insulator has a corner portion having a radius of curvature R1 between the first end portion and the side portion, and a corner portion having a radius of curvature R2 between the second end portion and the side portion, and
wherein the radii of curvature R1 and R2 satisfy R1 < R2.

5. The stator according to claim 4, wherein the radius of curvature R1 and the maximum thickness T1 satisfy R1 ≤ T1.

6. The stator according to any one of claims 1 to 5, wherein the insulator has an inner wall portion located at an inner end of the tooth in a radial direction about the axis and an outer wall portion located at an outer end of the tooth in the radial direction, and
wherein the gate mark is formed at the inner wall portion.

7. The stator according to any one of claims 1 to 6, wherein the insulator is formed of a thermoplastic resin.

8. The stator according to any one of claims 1 to 7, further comprising a mold resin portion covering the stator.

9. A motor comprising:
the stator according to any one of claims 1 to 8; and
a rotor surrounded by the stator and rotatable about the axis.

10. A fan comprising:
the motor according to claim 9; and
an impeller driven to rotate by the motor.

11. An air conditioner comprising an outdoor unit and an indoor unit connected with the outdoor unit via a refrigerant pipe,
wherein at least one of the outdoor unit and the indoor unit comprises the fan according to claim 10.

12. A manufacturing method of a stator, the method comprising the steps of:
preparing a stator core having a yoke extending in a circumferential direction about an axis and a tooth extending from the yoke toward the axis;
forming an insulator using a molding mold, the insulator having a winding portion surrounding the tooth; and
winding a coil around the winding portion of the insulator,
wherein in the forming step of the insulator, a first end portion of the winding portion is formed at one side of the tooth in a direction of the axis, a second end portion of the winding portion is formed at the other side of the tooth in the direction of the axis, and a side portion of the winding portion is formed at one side of the tooth in the circumferential direction,
wherein the first end portion has a maximum thickness T1 in the direction of the axis, the second end portion has a maximum thickness T2 in the direction of the axis, and the side portion has a maximum thickness T3 in the circumferential direction,
wherein the maximum thicknesses T1, T2 and T3 satisfy T3 < T1 < T2, and
wherein the molding mold has a gate on the same side as a portion for forming the first end portion in the direction of the axis.

13. A manufacturing method of a stator, the method comprising the steps of:
preparing a stator core having a yoke extending in a circumferential direction about an axis and a tooth extending from the yoke toward the axis;
forming an insulator using a molding mold, the insulator having a winding portion surrounding the tooth; and
winding a coil around the winding portion of the insulator,
wherein in the forming step of the insulator, a first end portion of the winding portion is formed at one side of the tooth in a direction of the axis, a second end portion of the winding portion is formed at the other side of the tooth in the direction of the axis, and a side portion of the winding portion is formed at one side of the tooth in the circumferential direction,
wherein the first end portion has a maximum thickness T1 in the direction of the axis, and the second end portion has a maximum thickness T2 in the direction of the axis,
wherein the first end portion has a curved surface having a radius of curvature RT1 and projecting on a side opposite to the tooth, and the second end portion has a curved surface having a radius of curvature RT2 and projecting on a side opposite to the tooth,
wherein the maximum thicknesses T1, T2 and T3 satisfy T1 < T2,
wherein the radii of curvature RT1 and RT2 satisfy RT1 > RT2, and
wherein the molding mold has a gate on the same side as a portion for forming the first end portion in the direction of the axis.
